# EUROPÄISCHE PATENTANMELDUNG

(11) **EP 4 094 819 A1**
(43) Veröffentlichungstag der Anmeldung: **30.11.2022**
(21) Anmeldenummer: 22180195.4
(22) Anmeldetag: 24.12.2012
(51) Int. Cl.: B01D 29/21

(54) **FILTERELEMENT**

(30) Priorität: 14.11.2012 DE 102012022283; 14.11.2012 DE 102012022285
(62) Teilanmeldung aus: 12812873.3
(71) Anmelder: Hydac Filtertechnik GmbH, 66280 Sulzbach/Saar (DE)
(72) Erfinder: Lang, Timo, 66539 Neunkirchen (DE)
(74) Vertreter: Bartels und Partner, Patentanwälte

(57) **Zusammenfassung**

2. Ein Filterelement (1) mit einem vorzugsweise mehrlagigen Aufbau eines Filtermediums (3), das in plissierter Form Filterfalten (5, 7) mit unterschiedlicher Faltenhöhe (h1, h2) aufweist, mit Filterfalten (7) mit einer ersten Faltenhöhe (h1) und mit Filterfalten (5) mit einer demgegenüber geringeren zweiten Faltenhöhe (h2), wobei das Filterelement eine Durchströmungsrichtung für abzureinigendes Fluid von einer Schmutzseite zu einer Reinseite (R) aufweist, ist dadurch gekennzeichnet, dass die benachbart zu der Reinseite (R) oder zu der Schmutzseite (S) hin angeordneten Übergänge aller Filterfalten (5, 7) entlang eines fiktiven Kreiszylinders (9) abschließen, der das Filtermedium (3) koaxial zu seiner Längsachse (LA) durchgreift.

## Beschreibung

Die Erfindung betrifft ein Filterelement mit einem vorzugsweise mehrlagigen Aufbau eines Filtermediums, das in plissierter Form Filterfalten mit unterschiedlicher Faltenhöhe aufweist, mit Filterfalten mit einer ersten Filterfaltenhöhe und mit Filterfalten mit einer demgegenüber geringeren zweiten Faltenhöhe, wobei das Filterelement eine Durchströmungsrichtung für abzureinigendes Fluid von einer Schmutzseite zu einer Reinseite aufweist.

Filterelemente dieser Art sind handelsüblich. In Verbindung mit Fluidanlagen verschiedenster Art finden solche Filterelemente verbreitet Anwendung für die Filterung von Verfahrensflüssigkeiten, Druckflüssigkeiten, wie Hydraulikölen, sowie flüssigen Kraft- und Schmierstoffen zur Aufbereitung flüssiger Medien und dergleichen. In vielen Fällen steht bei Fluidanlagen, bei denen die Filterelemente zum Einsatz kommen, nur ein begrenzter Nutzraum für den Ein- oder Ausbau der Anlagenteile zur Verfügung, die die betreffenden filterkerzenartigen Filterelemente enthalten. Andererseits ist, um entsprechend große Filterströme filtrieren zu können, eine ausreichende Größe der von dem Filterelement zur Verfügung gestellten Filterfläche erforderlich.

Zur Bereitstellung einer ausreichend großen Filterfläche weisen die bekannten Filterelemente, wie sie auf dem Markt frei erhältlich sind, ein typischerweise aus mehreren Lagen verschiedener Filtermaterialien zusammengesetztes, zickzackförmig gefaltetes oder plissiertes Filtermedium auf. Bei der Fertigung wird das Filtermedium durch eine Schneideeinrichtung hindurchgeführt, in welcher das Filtermedium randseitig auf Maß zugeschnitten wird, bevor es zu einer Faltmaschine weiterbewegt wird, in der die Zickzackform oder das Plissee ausgebildet wird. Im weiteren Verlauf der Fertigung wird sodann das zugeschnittene Filtermedium in Abschnitte aufgetrennt, welche zu einem Rohrkörper geformt werden und insoweit das Filterelement ausbilden.

Hiervon ausgehend stellt sich die Erfindung die Aufgabe, ein verbessertes Filterelement aufzuzeigen, das auch nach längerer Standdauer eine hohe Filterleistung bei einer geringen Durchströmgeschwindigkeit aufweist.

Diese Aufgabe wird durch ein Filterelement mit den Merkmalen von Anspruch 1 gelöst. Vorteilhafte Ausführungsformen und Weiterbildungen des Filterelements gehen aus den Unteransprüchen hervor.

Erfindungsgemäß ist vorgesehen, dass die benachbart zu der Reinseite oder zu der Schmutzseite hin angeordneten Übergänge aller Filterfalten entlang eines fiktiven Kreiszylinders abschließen, der das Filtermedium koaxial zu seiner Längsachse durchgreift.

Durch die erfindungsgemäße Anordnung von Filterfalten der ersten Faltenhöhe und der zweiten Faltenhöhe findet eine Stabilisierung statt, wobei die Filterfalten der zweiten Faltenhöhe die Filterfalten der ersten Faltenhöhe stützen. Mithin ist ein druckstabiler Aufbau für das Filterelement über die Filterfalten unterschiedlicher Höhenausprägung erreicht. Ferner werden die Filterfalten der ersten Faltenhöhe im Betrieb des Filterelementes in ihrer ursprünglichen Anordnung gehalten und weisen eine besonders große, der Schmutzseite zugewandte Oberfläche auf. Die der Schmutzseite zugewandte offene Oberfläche ist mithin größer als bei herkömmlichen Filterelementen mit einer einheitlichen Faltenhöhe über den gesamten Umfang. Dies erleichtert es dem Fluid, das Filtermedium zu durchdringen, und führt somit zu einem Filterelement mit einer über die Lebensdauer verbesserten Filterleistung sowie einer längeren Standzeit.

Bei Standard-Filterelementlösungen haben alle Filterfalten regelmäßig die gleiche Einsatzhöhe, was in Abhängigkeit der Durchströmungsverhältnisse dazu führen kann, dass mehrere benachbart zueinander angeordnete Filterfalten entlang ihrer wirksamen Filterfläche unmittelbar in Anlage miteinander kommen, was zu einer Art "Verblocken" des Elementmaterials in diesem zusammenhängenden Bereich führt, da das zu filtrierende Medium nicht mehr ungestört alle Filterfalten des Elementverbundes erreichen kann. Durch die eingebrachten Filterfalten mit der zweiten geringeren Faltenhöhe, werden die ersten Filterfalten, unabhängig von der Durchströmungssituation, sicher in ihrer Position gehalten und können so über die gesamte Einsatzdauer des Filterelementes hinweg wirksam die Abfiltration von Partikelverschmutzungen aus dem Fluid gewährleisten. Dies ist so mit konventionellen Elementen nicht möglich.

Vorteilhaft sind die Filterfalten mit der ersten Faltenhöhe und die Filterfalten mit der zweiten Faltenhöhe überwiegend alternierend zueinander angeordnet. Die alternierende bzw. variierende Anordnung bewirkt eine besonders effektive Stabilisierung der Faltengeometrie der Filterfalten der ersten Faltenhöhe. Auch können bei alternierender Anordnung mehr Filterfalten der ersten Faltenhöhe frei über Filterfalten der zweiten Faltenhöhe vorstehen, sodass die der Schmutzseite oder der Reinseite ausgesetzte Oberfläche der Filterfalten der ersten Faltenhöhe maximiert ist.

Durch die Filterfalten mit der zweiten Filterfaltenhöhe kann die Ausrichtung und/oder Anordnung der Filterfalten mit der ersten Faltenhöhe stabilisiert sein. Die Filterfalten der zweiten Faltenhöhe dienen daher als Stützfalten. Diese Stabilisierung wirkt sich vorteilhaft im Verlauf der Lebensdauer des Filterelements aus, da durch die Stabilisierung der Form der Filterfalten die Filtrationsleistung über die Zeit erheblich verbessert wird.

Besonders vorteilhaft ist durch die Filterfalten mit der zweiten Faltenhöhe ein Kontaktieren oder ein Aneinanderkleben der Filterfalten der ersten Faltenhöhe verhindert, sofern die Filterfalten mit der ersten Faltenhöhe über die mit der zweiten Faltenhöhe zur Schmutzseite oder zur Reinseite hin vorstehen. Das Kontaktieren bzw. Aneinanderkleben von Filterfalten führt immer zu einer unerwünschten Reduzierung der wirksamen Filterfläche. Durch die erfindungsgemäße Anordnung wird dies nun wirksam unterbunden, da die Filterfalten der ersten Faltenhöhe voneinander beabstandet sind.

Zweckmäßigerweise ist die wirksame Filterfläche des Filtermediums gegenüber einem Filtermedium mit einheitlich hohen Filterfalten, vergleichbar der ersten Faltenhöhe, trotz Verringerung der Filteroberfläche gleich, vorzugsweise erhöht. Folglich kann bei gleicher wirksamer Filterfläche die Menge an Filtermedium reduziert werden beziehungsweise trotz der Verringerung der Oberfläche des Filtermediums die wirksame Filterfläche erhalten werden. Beide Herangehensweisen führen zu einem wesentlich verbesserten Filterelement, bei dem die Ausnutzung des Filtermediums optimal ist.

Vorteilhaft ist die Reinseite auf der Innenseite des Filterelementes angeordnet, die unter Bildung des fiktiven Kreiszylinders von dem Filtermedium umfasst ist. Auf diese Weise wird das Filtermedium bei der Filtration vorteilhaft von außen nach innen durchströmt.

Alternativ kann vorgesehen sein, dass die Reinseite auf einer Außenseite des Filtermediums angeordnet ist, die dem fiktiven Kreiszylinder zugewandt ist. Mithin wird das Filtermedium von der Innenseite zur Außenseite hin durchströmt. Diese Anordnung hat den Vorteil, dass die Dichte des Filtermediums wesentlich erhöht werden kann.

Vorteilhafterweise ist die jeweilige Filterfalte aus zwei aneinanderliegenden ebenen Filterflächen gebildet, die zusammenhängend das plissierte Filtermedium ausbilden und die im Bereich des Überganges zu der jeweils benachbart angeordneten Filterfalte den gleichen Biegeradius aufweisen. Durch die bogenförmigen Übergänge wird das Filtermedium beim Plissieren geschont. Weiterhin ist sichergestellt, dass die ebenen Filterflächen voneinander beabstandet sind. Auf diese Weise wird die wirksame Filterfläche ebenfalls vorteilhaft erhöht.

Zweckmäßigerweise sind die Filterfalten zur einen Seite hin durch ein Stützrohr abgestützt, durch das der fiktive Kreiszylinder ausgebildet ist. Durch das Stützrohr wird eine Anlagefläche für die Filterfalten geboten. Daher werden sie in ihrer Form zusätzlich stabilisiert, was insbesondere bei stark schwankenden oder pulsierenden Fluidströmungen von Vorteil ist.

Weiterhin können die Filterfalten mit der zweiten Faltenhöhe 1/4 bis 3/4, vorzugsweise etwa 2/3, der Höhe der Filterfalten mit der ersten Faltenhöhe einnehmen. In Versuchen konnte für diesen Bereich eine optimale Stabilisierungs- und Stützwirkung der Filterfalten bei gleichzeitiger Optimierung der wirksamen Filterfläche ermittelt werden.

Besonders vorteilhaft ist in axialer Draufsicht auf das Filtermedium und von der Reinseite oder der Schmutzseite aus gesehen durch die Filterfalte der zweiten Filterfaltenhöhe, die von jeweils einer benachbart angeordneten Filterfalte mit der ersten Faltenhöhe begrenzt ist, eine Art M-Faltenanordnung ausgebildet.

Vorteilhafterweise spreizen sich für den Erhalt von spaltenförmigen Feinfiltrationsbereichen am reinseitig angeordneten Grund des Filtermediums die einzelnen Filterfalten unterschiedlicher Faltenhöhe mit konischem Verlauf unter Bildung der M-Faltenanordnung auf.

Zweckmäßigerweise ist aufgrund der M-Faltenanordnung zwischen zwei benachbart angeordneten Filterfalten der ersten Faltenhöhe, die eine Filterfalte der zweiten Faltenhöhe begrenzen, ein freier Warteraum für Fluid auf der Schmutzseite oder der Reinseite in der Art eines fiktiven Zylindersegments ausgebildet, das im Betrieb des Filterelements zu einer Vergleichmäßigung, sowie bevorzugt zu einer Reduzierung, der Strömungsgeschwindigkeit für das Fluid durch das Filterelement führt. Im freien Warteraum kann somit Fluid zwischengespeichert beziehungsweise aufgestaut werden, um dann gleichmäßig durch das Filtermedium hindurchzuströmen. Auf diese Weise wird die Filtrationsleistung verbessert und es wird eine übermäßige Aufladung des Fluids aufgrund einer zu hohen Strömungsgeschwindigkeit vermieden.

Besonders bevorzugt ist aufgrund der M-Faltenanordnung im Betrieb des Filterelements, bei dem dieses im Normalfall von einem Fluid mit Partikelverschmutzung durchströmt ist, das zu einer elektrostatischen Aufladung des Filterelements führt, diese Aufladung durch die Reduzierung der Fluidströmungsgeschwindigkeit bedingt durch den jeweiligen Warteraum reduziert.

Die Erfindung ist nachfolgend anhand von einem in den Figuren dargestellten Ausführungsbeispiel näher erläutert. Es zeigen:
- Fig. 1: eine perspektivische Ansicht des Filtermediums;
- Fig. 2: eine Draufsicht auf das Filtermedium der Fig. 1; und
- Fig. 3: einen vergrößerten Ausschnitt der Darstellung der Fig. 2.

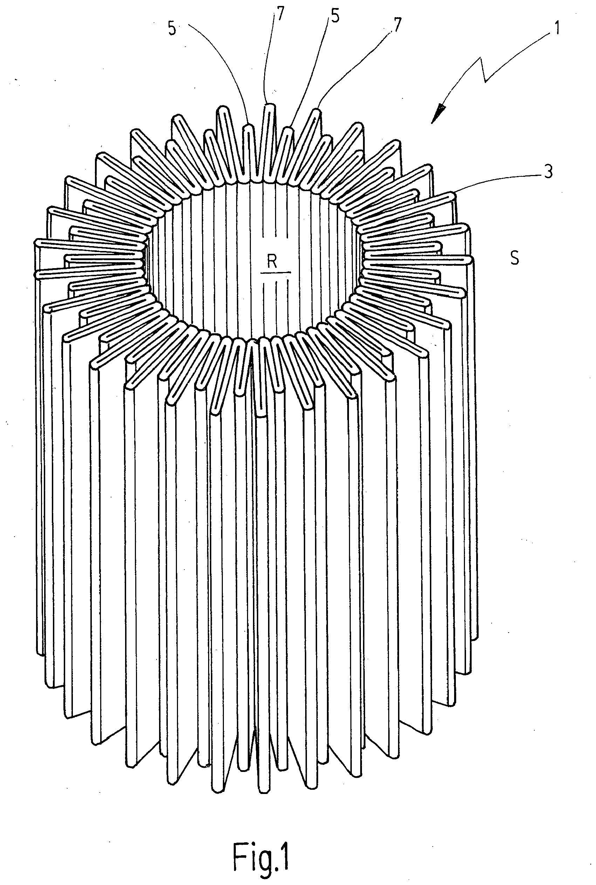

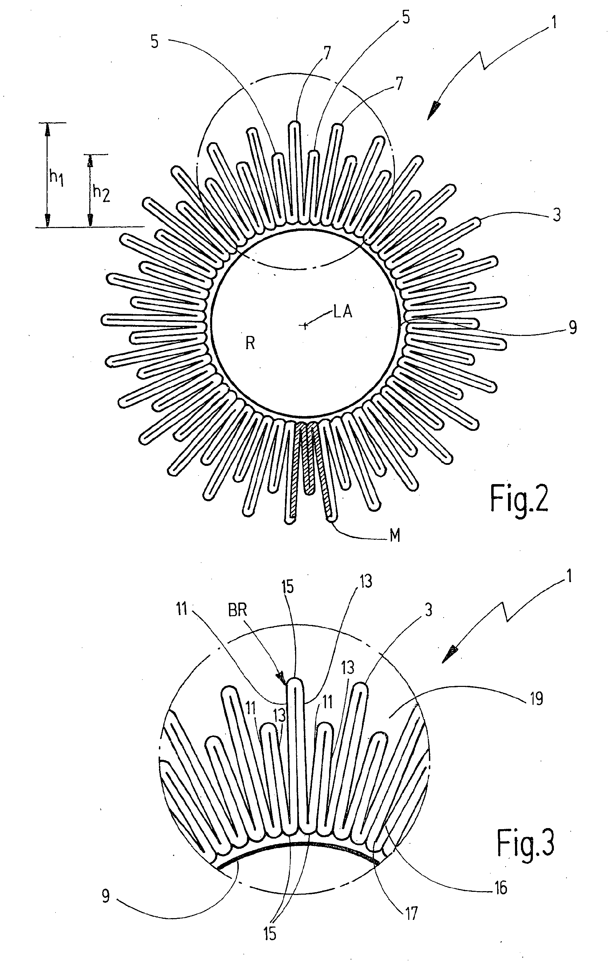

In den Fig. 1 bis 3 ist ein erfindungsgemäßes Filterelement 1 mit einem mehrlagigen Aufbau eines Filtermediums 3 gezeigt. Das Filtermedium 3 weist in plissierter Form Filterfalten 5, 7 mit unterschiedlicher Faltenhöhe h1, h2 auf. Filterfalten 7 einer ersten Faltenhöhe h1 unterscheiden sich von Filterfalten 5 mit einer demgegenüber geringeren zweiten Faltenhöhe h2.

Die Filterfalten 5 mit der zweiten Faltenhöhe h2 nehmen etwa 2/3 der Höhe der Filterfalten 7 mit der ersten Faltenhöhe h1 ein. Das Filterelement 1 weist eine Durchströmungsrichtung für ein zu reinigendes Fluid von einer außenliegenden Schmutzseite 5 zu einer innenliegenden Reinseite R auf. Zur Reinseite R hin schließen alle Filterfalten 5, 7 entlang eines fiktiven Kreiszylinders 9 ab, der das Filtermedium 3 koaxial zu seiner Längsachse LA durchgreift.

Die Filterfalten 7 mit der ersten Faltenhöhe h1 und die Filterfalten 5 mit der zweiten Faltenhöhe h2 sind alternierend zueinander angeordnet und zwar der Art, dass die Filterfalten 5 mit der zweiten Faltenhöhe h2 die Ausrichtung und Anordnung der Filterfalten 7 mit der ersten Faltenhöhe h1 stabilisieren.

Durch die Filterfalten 5 mit der zweiten Faltenhöhe h2 wird ein Kontaktieren oder ein Aneinanderkleben der Filterfalten 7 der ersten Faltenhöhe h1 verhindert, weil die Filterfalten 7 mit der ersten Faltenhöhe h1 über die Filterfalten 5 mit der zweiten Faltenhöhe h2 zur Schmutzseite hin vorstehen und voneinander beabstandet sind.

Besonders vorteilhaft ist, dass die wirksame Filterfläche des Filtermediums 3 gegenüber einem Filtermedium mit einheitlich hohen Filterfalten, vergleichbar der ersten Faltenhöhe h1, trotz Verringerung der Filteroberfläche gleich oder sogar erhöht ist. Die jeweilige Filterfalte 5, 7 ist zwar aus zwei aneinanderliegenden ebenen Filterflächen 11, 13 gebildet, die zusammenhängend das plissierte Filtermedium 3 ausbilden. Die ebenen Filterflächen 11, 13 weisen dabei im Bereich des Überganges 15 zu der jeweils benachbart angeordneten Filterfalte 7, 5 den gleichen Biegeradius BR auf.

Auf der Reinseite R sind die Filterfalten 5, 7 durch ein Stützrohr 9 abgestützt, durch das der fiktive Kreiszylinder ausgebildet ist. Das Stützrohr 9 ist aus Metall gefertigt und weist auf seiner Umfangsfläche verteilt angeordnete, kreisförmige Löcher für den Fluiddurchtritt auf.

In axialer Draufsicht auf das Filtermedium 3 und von der Reinseite R aus gesehen bildet die Filterfalte 5 mit der zweiten Faltenhöhe h2, die von jeweils einer benachbart angeordneten Filterfalte 7 mit der ersten Faltenhöhe h1 begrenzt ist, eine Art M-Faltenanordnung M aus. Für den Erhalt von spaltenförmigen Feinfiltrationsbereichen 16 am reinseitig angeordneten Grund 17 des Filtermediums 3 spreizen sich die einzelnen Filterfalten 5, 7 unterschiedlicher Faltenhöhe h1, h2 in konischem Verlauf unter Bildung der M-Faltenanordnung M auf.

Aufgrund der M-Faltenanordnung M zwischen zwei benachbart angeordneten Filterfalten 7 der ersten Faltenhöhe h1, die eine Filterfalte 5 mit der zweiten Faltenhöhe h2 begrenzen, ist ein freier Warteraum 19 für Fluid auf der Schmutzseite S in der Art eines fiktiven Zylindersegments gebildet. Im Betrieb des Filterelements 1 kommt es aufgrund des freien Warteraums 19 zu einer Vergleichmäßigung und zu einer Reduzierung der Strömungsgeschwindigkeit des Fluides durch das Filterelement 1.

Weiterhin ist aufgrund der M-Faltenanordnung M im Betrieb des Filterelements 1, bei dem dieses im Normalfall von einem Fluid mit Partikelverschmutzung durchströmt ist, was zu einer elektrostatischen Aufladung des Filterelements 1 führt, diese Aufladung durch Reduzierung der Fluidströmung bedingt durch den jeweiligen Warteraum 19 reduziert. Hierbei hat sich gezeigt, dass die Aufladung mit steigender Strömungsgeschwindigkeit zunimmt und dementsprechend bei sinkender Strömungsgeschwindigkeit abnimmt. Ziel ist es daher, die Durchströmungsgeschwindigkeit soweit zu reduzieren, dass eine etwaige verbleibende Aufladung durch eine Erdung des Fluids in nachgeschalteten Bauteilen eines hydraulischen Kreislaufs abgeleitet werden kann.

Mithin weist das erfindungsgemäße Filterelement 1 auch nach längerer Standdauer eine hohe Filterleistung bei einer geringen Durchströmgeschwindigkeit auf. Das Filterelement 1 ist daher kostengünstiger und aufgrund der verminderten Aufladung des durchströmenden Fluids, die zu unerwünschten Entladungen mit der Folge der Zerstörung des Elementmateriales, der steigenden Ölalterung sowie einer erhöhten Brandgefahr führen kann, sicherer im Betrieb.

In den Figuren ist die Reinseite R auf der Innenseite und die Schmutzseite S auf der Außenseite des Filtermediums 3 vorgesehen. Es versteht sich von selbst, dass die Reinseite R auch auf der Außenseite und die Schmutzseite auf der Innenseite des Filtermediums 3 angeordnet sein kann.

## Patentansprüche

1. Filterelement mit einem vorzugsweise mehrlagigen Aufbau eines Filtermediums (3), das in plissierter Form Filterfalten (5, 7) mit unterschiedlicher Faltenhöhe (h1, h2) aufweist, mit Filterfalten (7) mit einer ersten Faltenhöhe (h1) und mit Filterfalten (5) mit einer demgegenüber geringeren zweiten Faltenhöhe (h2), wobei das Filterelement eine Durchströmungsrichtung für abzureinigendes Fluid von einer Schmutzseite (S) zu einer Reinseite (R) aufweist, **dadurch gekennzeichnet, dass** die benachbart zu der Reinseite (R) oder zu der Schmutzseite (S) hin angeordneten Übergänge aller Filterfalten (5, 7) entlang eines fiktiven Kreiszylinders (9) abschließen, der das Filtermedium (3) koaxial zu seiner Längsachse (LA) durchgreift.

2. Filterelement nach Anspruch 1, **dadurch gekennzeichnet, dass** die Filterfalten (7) mit der ersten Faltenhöhe (h1) und die Filterfalten (5) mit der zweiten Faltenhöhe (h2) überwiegend alternierend zueinander angeordnet sind.

3. Filterelement nach einem der vorhergehenden Ansprüche, **dadurch gekennzeichnet, dass** durch die Filterfalten (5) mit der zweiten Faltenhöhe (h2) die Ausrichtung und/oder Anordnung der Filterfalten (7) mit der ersten Faltenhöhe (h1) stabilisiert ist.

4. Filterelement nach Anspruch 3, **dadurch gekennzeichnet, dass** durch die Filterfalten (5) mit der zweiten Faltenhöhe (h2) ein Kontaktieren oder Aneinanderkleben der Filterfalten (7) mit der ersten Faltenhöhe (h1) verhindert ist, sofern die Filterfalten (7) mit der ersten Faltenhöhe (h1) über die Filterfalten (5) mit der zweiten Faltenhöhe (h2) zur Schmutzseite (S) oder zur Reinseite (R) hin vorstehen.

5. Filterelement nach einem der vorhergehenden Ansprüche, **dadurch gekennzeichnet, dass** die wirksame Filterfläche des Filtermediums (3) gegenüber einem Filtermedium mit einheitlich hohen Filterfalten, vergleichbar der ersten Faltenhöhe (h1), trotz Verringerung der Filteroberfläche gleich, vorzugsweise jedoch erhöht, ist.

6. Filterelement nach einem der vorhergehenden Ansprüche, **dadurch gekennzeichnet, dass** die Reinseite (R) auf der Innenseite des Filterelements angeordnet ist, die unter Bildung des fiktiven Kreiszylinders (9) von dem Filtermedium (3) umfasst ist.

7. Filterelement nach einem der vorhergehenden Ansprüche, **dadurch gekennzeichnet, dass** die Reinseite (R) auf einer Außenseite des Filtermediums (3) angeordnet ist, die dem fiktiven Kreiszylinder (9) abgewandt ist.

8. Filterelement nach einem der vorhergehenden Ansprüche, **dadurch gekennzeichnet, dass** die jeweilige Filterfalte (5, 7) aus zwei aneinanderliegenden ebenen Filterflächen (11, 13) gebildet ist, die zusammenhängend das plissierte Filtermedium (3) ausbilden und die im Bereich des Überganges (15) zu der jeweils benachbart angeordneten Filterfalte (7, 5) den gleichen Biegeradius (BR) aufweisen.

9. Filterelement nach einem der vorhergehenden Ansprüche, **dadurch gekennzeichnet, dass** die Filterfalten (5, 7) zur Reinseite (R) oder zur Schmutzseite (S) hin durch ein Stützrohr (9) abgestützt sind, durch das der fiktive Kreiszylinder (9) ausgebildet ist.

10. Filterelement nach einem der vorhergehenden Ansprüche, **dadurch gekennzeichnet, dass** die Filterfalten (5) mit der zweiten Faltenhöhe (h2) etwa 1/4 bis 3/4, vorzugsweise etwa 2/3, der Höhe der Filterfalten (7) mit der ersten Faltenhöhe (h1) einnehmen.

11. Filterelement nach einem der vorhergehenden Ansprüche, **dadurch gekennzeichnet, dass** in axialer Draufsicht auf das Filtermedium (3) und von der Reinseite (R) oder von der Schmutzseite (S) aus gesehen die Filterfalte (5) mit der zweiten Faltenhöhe (h2), die von jeweils einer benachbart angeordneten Filterfalte (7) mit der ersten Faltenhöhe (h1) begrenzt ist, eine Art M-Faltenanordnung (M) ausbildet.

12. Filterelement nach Anspruch 11, **dadurch gekennzeichnet, dass** für den Erhalt von spaltenförmigen Feinfiltrationsbereichen (16) am reinseitig angeordneten Grund (17) des Filtermediums (3) sich die einzelnen Filterfalten (5, 7) unterschiedlicher Faltenhöhe (h1, h2) mit konischem Verlauf unter Bildung der M-Faltenanordnung (M) aufspreizen.

13. Filterelement nach Anspruch 11 oder 12, **dadurch gekennzeichnet, dass** aufgrund der M-Faltenanordnung (M) zwischen zwei benachbart angeordneten Filterfalten (7) mit der ersten Faltenhöhe (h1), die eine Filterfalte (5) mit der zweiten Faltenhöhe (h2) begrenzen, ein freier Warteraum (19) für Fluid auf der Schmutzseite (S) oder auf der Reinseite (R) in der Art eines fiktiven Zylindersegments gebildet ist, das im Betrieb des Filterelements zu einer Vergleichmäßigung, sowie bevorzugt zu einer Reduzierung, der Strömungsgeschwindigkeit für das Fluid durch das Filterelement führt.

14. Filterelement nach einem der Ansprüche 11 bis 13, **dadurch gekennzeichnet, dass** aufgrund der M-Faltenanordnung (M) im Betrieb des Filterelements, bei dem dieses im Normalfall von einem Fluid mit Partikelverschmutzung durchströmt ist, was zu einer elektrostatischen Aufladung des Filterelements führt, diese Aufladung durch die Reduzierung der Fluidströmungsgeschwindigkeit bedingt durch den jeweiligen Warteraum (19) reduziert ist.
